# EUROPÄISCHE PATENTANMELDUNG

(11) **EP 1 668 973 A1**
(43) Veröffentlichungstag der Anmeldung: **14.06.2006**
(21) Anmeldenummer: 05111661.4
(22) Anmeldetag: 02.12.2005
(51) Int. Cl.: A01B 59/00, A01B 59/06

(54) **Fremdkörperschutz zum Verhindern eines Eindringens von Fremdkörpern in ein System**

(30) Priorität: 09.12.2004 US 8771
(71) Anmelder: DEERE & COMPANY, Moline, Illinois 61265-8098 (US)
(72) Erfinder: Giesmann, Kendall L, Waverly, IA 50677 (US); Wood Jr., Robert L, Waterloo, IA 50703 (US); Bowman, Dennis A, Cedar Falls, IA 50613 (US)
(74) Vertreter: Bradl, Joachim

(57) **Zusammenfassung**

Die vorliegende Erfindung betrifft einen Fremdkörperschutz zum Verhindern eines Eindringens von Fremdkörpern in ein System. Das System weist ein Gehäuse (12) und eine Einheit (10) auf. Die Einheit (10) ist in ihrer Länge verstellbar und an dem Gehäuse (12) angebracht. Die Einheit (12) weist einen Zylinder (22) auf, welcher benachbart und bewegbar relativ zu einer Wand (20, 21) des Gehäuses (12) angeordnet ist. Der Fremdkörperschutz (30) weist einen Körper eines flexiblen Materials auf, welcher den Raum zwischen dem Zylinder (22) und der Wand (20, 21) des Gehäuses (12) einnimmt und das Eindringen von Fremdkörpern in diesem Raum verhindert. Der Körper wird komprimiert, wenn der Zylinder (22) auf die Gehäusewand (20, 21) zu bewegt wird. Der Körper wird expandiert, wenn der Zylinder (22) von der Gehäusewand (20, 21) wegbewegt wird.

## Beschreibung

Die vorliegende Erfindung betrifft einen Fremdkörperschutz zum Verhindern eines Eindringens von Fremdkörpern in ein System. Das System weist ein Gehäuse und eine Einheit auf. Die Einheit ist in ihrer Länge verstellbar und an dem Gehäuse angebracht. Die Einheit könnte drehbar bzw. verschwenkbar an dem Gehäuse angebracht sein. Die Einheit weist einen Zylinder auf, welcher benachbart und bewegbar relativ zu einer Wand des Gehäuses angeordnet ist.

Einige für die Landwirtschaft eingesetzte Traktoren mit Dreipunkt-Geräteanbau-Systeme weisen hydraulische Zylinder auf, welche einenends an einem Hubarm und anderenends drehbar und benachbart zu einem Gehäuse des Traktors angeordnet sind, beispielsweise an dem Differenzialgehäuse. Ablagerungen und Fremdkörper können zwischen dem Zylinder und der äußeren Wand des Gehäuses eindringen und/oder sich dort ablagern. Wenn der Zylinder ausgefahren und eingefahren wird und sich hierbei relativ zum Gehäuse bewegt, können diese Fremdkörper bzw. Ablagerungen verdichtet und/oder erhärtet werden und hierdurch eine auf den Zylinder wirkende zusätzliche Kraft ausüben. Diese zusätzliche Kraft kann Ursache für ein Versagen der Dichtung des Zylinders sein und somit eine Leckage bewirken und/oder der Bolzen oder das Lager verschleißen oder versagen. Beweglich angeordneten Schutzbleche und Manschetten wurden verwendet, um diese Probleme zu verhindern. Allerdings kann ein Schutzblech nicht völlig verhindern, dass kleine Ablagerungen bzw. Fremdkörper eingeschlossen oder abgelagert werden. Manschetten können reisen und Fremdkörper können eindringen und ebenfalls eingeschlossen werden.

Der vorliegenden Erfindung liegt daher die Aufgabe zugrunde, einen Fremdkörperschutz der eingangs genannten Art anzugeben und weiterzubilden, durch welchen die vorgenannten Probleme überwunden werden. Insbesondere soll ein Fremdkörperschutz angegeben und weitergebildet werden, mit welchem Fremdkörper oder Ablagerungen zwischen der Einheit und dem Gehäuse fern gehalten werden können.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß ist der Fremdkörperschutz der eingangs genannten Art gekennzeichnet durch einen Körper eines flexiblen Materials, welcher den Raum zwischen dem Zylinder und der Wand des Gehäuses einnimmt und das Eindringen von Fremdkörpern in diesen Raum verhindert. Der Körper wird komprimiert, wenn der Zylinder auf die Gehäusewand zu bewegt wird. Der Körper wird expandiert bzw. expandiert auf Grund seiner flexiblen Eigenschaft, wenn der Zylinder von der Gehäusewand wegbewegt wird.

Der Körper könnte an der Oberfläche des Zylinders und an der Wand des Gehäuses angeklebt bzw. befestigt sein. Das flexible Material könnte ein geschlossenzelliges und/oder geschlossenporiges Elastomermaterial aufweisen. Das flexible Material könnte formgepresst sein bzw. mit einem Formpressverfahren hergestellt werden.

Bevorzugt weist die Einheit eine Stange oder eine Kolbenstange auf, welche relativ zum Zylinder ausfahren oder einfahren kann. Im Konkreten handelt es sich bei der Einheit um einen Hydraulikzylinder.

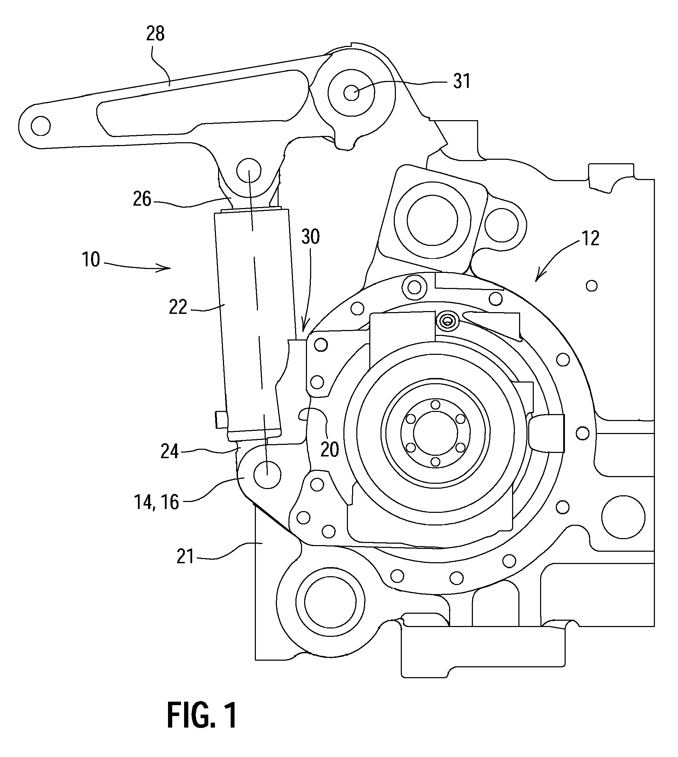

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der bevorzugten Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer Seitenansicht ein erstes erfindungsgemäßes Ausführungsbeispiel eines an einem Teil eines landwirtschaftlich genutzten Traktors vorgesehener Fremdkörperschutz,

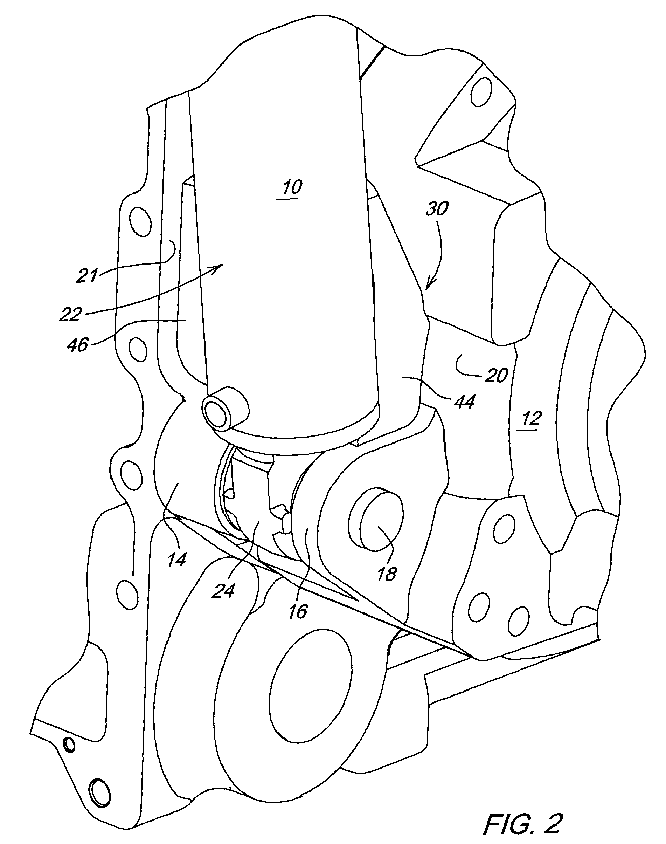

- Fig. 2: in einer perspektivischen Ansicht ein erfindungsgemäßes Ausführungsbeispiel,
- Fig. 3: in einer perspektivischen Ansicht ein erfindungsgemäßes Ausführungsbeispiel eines Fremdkörperschutzes, welcher an einem Hydraulikzylinder angebracht ist, wobei der Hydraulikzylinder in einem vom Gehäuse abgebauten Zustand gezeigt ist,
- Fig. 4: in einer perspektivischen Ansicht den Fremdkörperschutz aus Fig. 1 und
- Fig. 5: in einer anderen perspektivischen Ansicht den Fremdkörperschutz aus Fig. 1.

Gleiche oder ähnliche Bauteile bzw. Baugruppen sind in den Figuren mit denselben Bezugszeichen gekennzeichnet. Unter Bezugnahme auf die Figuren ist eine Einheit bzw. ein Verbindungselement 10 drehbar an einem Gehäuse 12 angebracht. Das Verbindungselement 10 kann beispielsweise eine Strebe, ein Pneumatik- oder Hydraulikzylinder oder eine längenverstellbare Spindelbaugruppe aufweisen. Das Gehäuse 12 könnte beispielsweise ein Differenzialgehäuse eines landwirtschaftlich genutzten Traktors sein. Das Verbindungselement 10 ist vorzugsweise in seiner Länge einstellbar und als Hydraulikzylinder eines Dreipunkt-Geräteanbau-Systems ausgebildet. Das Gehäuse 12 weist zwei Befestigungsvorsprünge 14, 16 auf, welche einen Drehbolzen 18 aufnehmen und lagern. Das Gehäuse 12 weist eine im Wesentlichen nach hinten orientierte Wand 20 und eine seitlich orientierte Wand 21 auf. Bei der Wände 20, 21 können ein Teil einer an dem Gehäuse 12 vorgesehene einfache oder komplexe Struktur sein und beide Wände 20, 21 sind im Wesentlichen dem Verbindungselement 10 zugewandt.

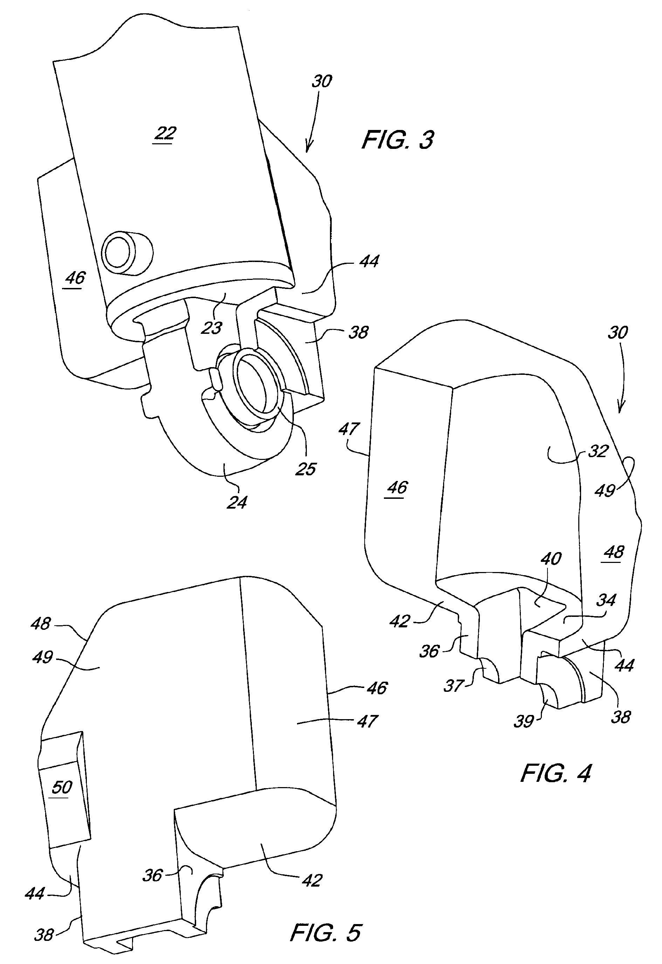

Das Verbindungselement 10 umfasst ein im Wesentlichen zylinderförmiges Teil oder einen Zylinder 22 sowie eine Befestigungsöse 24, welche von einem unteren Ende des Zylinders 22 abragt. In Fig. 3 ist gezeigt, dass eine im Wesentlichen zylinderförmige Nabe 25 von der Befestigungsöse 24 abragt. Die Befestigungsöse 24 und die Nabe 25 nehmen den Bolzen 18 auf und können relativ zum Bolzen 18 verdreht werden. Das Verbindungselement 10 umfasst eine Kolbenstange 26, welche aus dem Zylinder 22 ausfahren bzw. in den Zylinder 22 einfahren kann. Ein Ende der Kolbenstange 26 könnte an ein bewegbar angeordnetes Bauteil 28 gekoppelt sein, wobei das Bauteil 28 einen Winkelhebel bzw. Kniehebel oder einen Hubarm eines Dreipunkt-Geräteanbaus aufweisen kann, welcher um eine vorgegebene Dreh- bzw. Schwenkachse 31 drehbar bzw. schwenkbar gelagert ist.

Erfindungsgemäß ist ein Fremdkörperschutz 30 vorgesehen, welcher einen Teil des Raums zwischen dem Zylinder 22 und der Gehäusewand 20, 21 auffüllt bzw. einnimmt. Der Fremdkörperschutz 30 umfasst ein flexibles Material, welches vorzugsweise ein geschlossenzelliges und/oder geschlossenporiges Elastomermaterial aufweist.

Die rückwärtige Seite des Fremdkörperschutzes 30 umfasst eine im Wesentlichen zylinderförmig ausgebildete Ausnehmung 32, welche im Wesentlichen komplementär zu dem Zylinder 22 ausgebildet und an dem Zylinder 22 befestigt, insbesondere angeklebt, ist. Die Ausnehmung 32 endet an einer im Wesentlichen U-förmig ausgebildeten Endwand 34, welche im Wesentlichen komplementär zu dem bodenseitigen Ende der Oberfläche 23 des Zylinders 22 ausgebildet und im zusammengebauten Zustand an dem bodenseitigen Ende der Oberfläche 23 des Zylinders 22 zur Anlage kommt. Der Fremdkörperschutz 30 weist zwei Schenkel oder Teilstücke 36, 38 auf, welche von der Ausnehmung 32 und von der Endwand 34 abragen. Die Teilstücke 36, 38 bilden eine im Wesentlichen rechteckförmige Ausnehmung 40 (Schlitz) in welcher die Befestigungsöse 24 des Zylinders 22 aufgenommen wird. Die Teilstücke 36, 38 sind ausgebildet, um zumindest teilweise den Raum zwischen der Wand 20, dem Zylinder 22, den Befestigungsvorsprüngen 14, 16 und der Befestigungsöse 24 aufzufüllen bzw. einzunehmen. Die Teilstücke 36, 38 weisen jeweils eine kurvenförmige Oberfläche 37, 39 auf. Die Oberflächen 37, 39 kommen mit der äußeren Oberfläche der Nabe 25 zur Anlage und dichten diese entsprechend ab.

Der Fremdkörperschutz 30 umfasst Schulterstücke bzw. Teile 42 und 44, welche seitlich von den oberen Enden der Teilstücke 36, 38 jeweils abragen. Die Teile 42, 44 kommen an der oberen Oberfläche der Befestigungsvorsprünge 16, 14 entsprechend zur Anlage. Der Fremdkörperschutz 30 weist ein Seitenteil 46 auf, welches eine Wand 47 umfasst. Die Wand 47 kommt mit der Gehäusewand 21 zur Anlage. Das Seitenteil 46 nimmt den Raum zwischen dem Zylinder 22 und der Gehäusewand 21 ein. Der Fremdkörperschutz 30 weist ein vorderes Seitenteil 48 auf, welches eine vordere Wand 49 umfasst, die mit der Gehäusewand 20 zur Anlage kommt. Das vordere Seitenteil 48 nimmt den Raum zwischen dem Zylinder 22 und der Gehäusewand 20 ein. In Fig. 5 ist gezeigt, dass ein Vorsprung 50 von der vorderen Wand 49 abragt. Der Vorsprung 50 wird von einer in der Wand 20 vorgesehenen (nicht gezeigten) korrespondierenden Ausnehmung aufgenommen.

Bevorzugt ist der Fremdkörperschutz 30 nur an dem Zylinder 22 befestigt oder festgeklebt. Der Festkörperschutz ist allerdings derart geformt und von seiner Größe derart bemessen, dass die Wände 47, 49 jeweils stets zur Anlage bzw. zum Eingriff an die Gehäusewände 21, 20 gepresst bzw. gedrückt werden. Dementsprechend verhindert der Fremdkörperschutz 30, dass Fremdkörper oder Ablagerungen in den Raum zwischen dem Zylinder 10 und der Wände des Gehäuses 12 eindringen bzw. sich dort ablagern.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

## Patentansprüche

1. Fremdkörperschutz zum Verhindern eines Eindringens von Fremdkörpern in ein System, wobei das System ein Gehäuse (12) und eine Einheit (10) aufweist, wobei die Einheit (10) in ihrer Länge verstellbar und an dem Gehäuse (12) angebracht ist, wobei die Einheit (12) einen Zylinder (22) aufweist, welcher benachbart und bewegbar relativ zu einer Wand (20, 21) des Gehäuses (12) angeordnet ist, **dadurch gekennzeichnet, dass** der Fremdkörperschutz (30) einen Körper eines flexiblen Materials aufweist, welcher den Raum zwischen dem Zylinder (22) und der Wand (20, 21) des Gehäuses (12) einnimmt und das Eindringen von Fremdkörpern in diesem Raum verhindert, dass der Körper komprimiert wird, wenn der Zylinder (22) sich auf die Gehäusewand (20, 21) zu bewegt und dass der Körper expandiert wird, wenn der Zylinder (22) von der Gehäusewand (20, 21) wegbewegt wird.

2. Fremdkörperschutz nach Anspruch 1, **dadurch gekennzeichnet, dass** der Körper an der Oberfläche des Zylinders (22) und/oder an der Wand (20, 21) des Gehäuses (12) angeklebt bzw. befestigt ist.

3. Fremdkörperschutz nach Anspruch 1 oder 2, **dadurch gekennzeichnet, dass** das flexibles Material ein geschlossenzelliges und/oder geschlossenporiges Elastomermaterial aufweist.

4. Fremdkörperschutz nach Anspruch 3, **dadurch gekennzeichnet, dass** das flexible Material formgepresst ist.

5. Fremdkörperschutz nach einem der Ansprüche 1 bis 4, **dadurch gekennzeichnet, dass** die Einheit (10) eine Stange oder eine Kolbenstange (26) aufweist, welche relativ zum Zylinder (22) ausfahren oder einfahren kann.
